# EUROPEAN PATENT SPECIFICATION

(11) **EP 2 085 633 B1**
(45) Date of publication and mention of the grant of the patent: **18.04.2018**
(21) Application number: 09001175.0
(22) Date of filing: 28.01.2009
(51) Int. Cl.: F16D 23/14, F16C 33/78

(54) **Clutch release bearing**
Kupplungsausrücklager
Roulement de libération d'embrayage

(30) Priority: 31.01.2008 JP 2008020432
(43) Date of publication of application: 05.08.2009
(73) Proprietor: JTEKT Corporation, Osaka-shi Osaka 542-8502 (JP)
(72) Inventor: Suzuki, Akiyuki, Osaka-shi, Osaka 542-8502 (JP); Sugimoto, Takashi, Osaka-shi, Osaka 542-8502 (JP); Kawamura, Motoshi, Osaka-shi, Osaka 542-8502 (JP)
(74) Representative: Hoefer & Partner Patentanwälte mbB

(56) References cited:
- EP-A1- 1 152 161
- EP-A2- 0 806 582
- DE-A1-102005 053 612
- GB-A- 1 010 775

## Description

### BACKGROUND OF THE INVENTION

### 1. Field of the Invention

The present invention relates to a clutch release bearing.

### 2. Description of the Related Art

An automobile clutch mechanism includes a clutch release bearing. The force generated by depressing the clutch pedal is transmitted to a release fork via a release cylinder and presses the clutch release bearing. A diaphragm spring is then pressed by the clutch release bearing, thereby releasing the pressure engagement between a clutch disc and a flywheel.

Then, a gear change operation may be carried out in the transmission. When changing gears, the clutch release bearing allows the force applied by the clutch fork, which does not rotate, to be transmitted to the diaphragm spring, which is rotating. An example of such clutch release bearing is described in Japanese Utility Model Application Publication No. 7-41073 (JP-U-7-41073).

When foreign contaminants enters the clutch release bearing, it may adversely affect the low-torque properties or shorten the service life of the bearing. Therefore, clutch release bearings are typically provided with a seal. In conventional clutch release bearings, however, various factors make it difficult to provide sufficient space for a seal and, in particular, to provide sufficient space to secure the seal.

In an outer race-rotating clutch release bearing described in JP-U-7-41073, a seal is press-fitted on the inner peripheral surface of the outer race. Thus, in the bearing, the space inside the seal is relatively small and the amount of grease that may be contained in the bearing is small. Also, the lip of the seal may be deformed to such an extent by the action of centrifugal force that the margin for securing the seal may be changed. In addition, because the seal is located close to where the diaphragm spring is in contact with the outer race, if the outer race is deformed by the load from the diaphragm spring, the seal may be loosened or displaced. In related arts, no method of solving the problem has been suggested. Another clutch release bearing comprising a seal is e.g. known from GB 1010 775 A.

### SUMMARY OF THE INVENTION

The present invention provides a clutch release bearing having a seal that is superior to conventional seals in that it is less likely to be affected by centrifugal force and the load from the diaphragm, allows a larger amount of grease to be contained in the bearing, and is reliably secured to the bearing even in tight spatial conditions.

A clutch release bearing having an outer race as an rotating wheel according to a first aspect of the present invention includes: a seal member, having an inner axial end and an outer axial end, that is fitted on an outer peripheral surface of an inner race that faces a diaphragm spring, the seal member having a lip portion that extends toward the outer race, an abutting surface that extends radially from the outer axial end and axially abuts an axial surface of the inner race; a protruding portion that protrudes radially inward from the inner axial end; and a stepped portion formed on the inner race that engages the protruding portion.

Therefore, in the clutch release bearing according to the first aspect of the present invention, because the seal is attached to the inner race, the following problems which may arise if the seal is attached to the outer race as described above do not occur: the amount of grease is limited; the seal is deformed by centrifugal force; the seal is displaced by the load from the diaphragm, etc. That is, because a larger amount of grease may be contained in the bearing, good lubrication and longer service life of the bearing can be achieved. Also, because the seal is secured to the inner race, no centrifugal force acts on the seal and the load from the diaphragm is not exerted on the seal. Therefore, deformation of the seal caused by centrifugal force and displacement of the seal caused by the load can be prevented. In addition, when the seal is attached to a portion of the inner race on the side of the diaphragm spring, the stepped portion of the inner race and the protruding portion of the seal member are engaged with each other to secure the seal to the inner race. Therefore, the seal can be secured more reliably in spite of the spatial restrictions, which are inevitable when the seal is disposed on a portion of the inner race on the side of the diaphragm spring in a clutch release bearing.

The lip portion may be formed axially outward from a contact area between the inner race and the seal member.

Because the lip portion is located near a periphery of the bearing, more space is formed between the seal and a rolling element. Thus, a larger amount of grease may be contained within the bearing, and good lubrication and longer service life of the bearing can be achieved.

The lip portion may have a first lip portion that is located closer to a rolling element disposed between the outer race and the inner race and that has a base portion and a tip portion, the tip portion is located radially outward of the base portion; and a second lip portion located farther away from the rolling element that also has a base portion and a tip portion, the tip portion is located radially inward from the base portion.

In this case, the first lip portion, which is closer to the rolling element, retains the grease and the second lip portion, which is closer to the outside of the bearing, prevents the entry of foreign contaminants such as muddy water or other foreign matterforeign contaminants from the outside. In addition, the first lip portion, which is configured so that the base portion is located radially outward of the tip portion, is suitable for retaining the grease. The second lip portion, which is configures so that the tip portion is located radially inward from the base portion, prevents the entry of foreign contaminants such as muddy water. Therefore, retention of the grease and prevention of entrance of foreign contaminants such as muddy water may be achieved simultaneously by the two lip portions.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a side cross-sectional view of a clutch release bearing according to an embodiment of the present invention;
FIG. 2 is a view illustrating a first modified seal;
FIG. 3 is a view illustrating a second modified seal;
FIG. 4 is a view illustrating a third modified seal; and
FIG. 5 is a view illustrating a fourth modified seal.

### DETAILED DESCRIPTION OF EMBODIMENTS

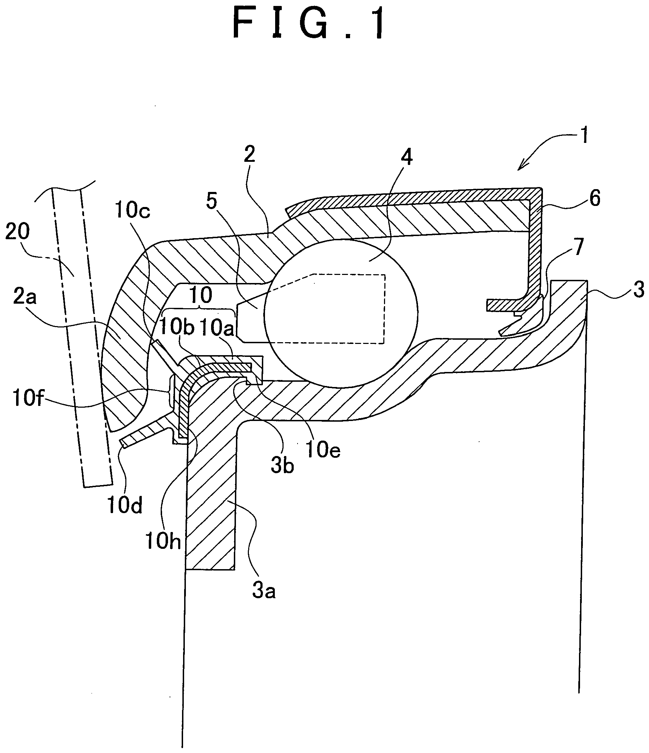

Description is hereinafter made of an embodiment of the present invention with reference to the drawings. FIG. 1 shows a side cross-sectional view of a clutch release bearing (bearing) 1.

As shown in FIG. 1, in the bearing 1, rolling element bearings (balls) 4 are disposed between an outer race 2 and an inner race 3, each of which is formed by pressing a metal plate. A raceway surface for the rolling element bearings 4 is formed on an inner peripheral surface of the outer race 2. Similarly, a raceway surface for the rolling element bearings 4 is formed on an outer peripheral surface of the inner race 3. A plurality of rolling element bearings 4 are held in positions circumferentially spaced at given intervals by a holder 5. A shaft (not shown) is located in the area that is in a lower part of FIG. 1, and the inner race 3 may be secured to the shaft by an additional member (not shown).

As shown in FIG. 1, a cover 6 is fitted over a portion of the outer race 2 of the bearing 1 including the right-hand end as viewed in FIG. 1. The cover 6 is bent into an L-shaped cross-sectional configuration toward the inner race 3 at the end of the outer race 2 and extends to the vicinity of the inner race 3. A seal 7 is secured to a portion of the cover 6 close to the extended end, and is in contact with the inner race 3. This arrangement provides a seal at the right-hand part of the bearing 1 in FIG. 1.

A diaphragm spring 20 is located on the left-hand side of the bearing 1 as viewed in FIG. 1. A clutch disc and a flywheel are also located. A release fork is located on the right-hand side as viewed in FIG. 1. A release cylinder and a clutch pedal are connected to the release fork. The clutch disc, the flywheel, the release fork, the release cylinder and the clutch pedal are not shown.

When the clutch pedal is not depressed, the clutch disc remains pressed against the flywheel by the action of the diaphragm spring 20. The flywheel is rotated by the driving force from the engine, and the pressure engagement allows transmission of the driving force. When the clutch pedal is depressed, a force on the clutch pedal is transmitted to the release cylinder, whereby the clutch release bearing is pressed. The clutch release bearing 1 is thereby pressed from the right as viewed in FIG. 1, and the bearing 1 presses the diaphragm spring 20. Then, the clutch disc is disengaged from the flywheel. As a result, the transmission of driving force from the engine is interrupted. In this state, the the gear change operation may be performed.

The outer race 2 of the clutch release bearing 1 has an outer race flange 2a that extends from a portion on the side of the diaphragm spring 20. As shown in FIG. 1, the outer race flange 2a extends radially inward. In FIG. 1, the outer race flange 2a has an arcuate cross-sectional configuration that bulges toward and contacts the diaphragm spring 20.

The inner race 3 of the bearing 1 also has an inner race flange 3a that extends radially inward from a portion on the side of the diaphragm spring 20. The inner race 3 also has a stepped portion 3b used to secure a seal 10 as described later.

As shown in FIG. 1, in the bearing 1, a seal 10 is secured to a portion of the inner race 3 on the side of the diaphragm spring 20. The seal 10 is constituted of a resin portion 10a and a metal core piece 10b. The resin portion 10a may be made of an elastic material such as rubber. Both the resin portion 10a and the core piece 10b of the seal 10 have an L-shaped cross-section, and the seal 10 has an abutting surface 10h that extends radially inward from its axially outward end. The term "axially inward" means the axial direction toward the rolling element 4, and the term "axially outward" means the axial direction away from the rolling element 4. When the seal 10 is press-fitted on the inner race 3, the abutting surface 10h abuts against the axially outward surface of the inner race flange 3a.

The seal 10 also has a protruding portion 10e that protrudes radially inward from its axially inward end. The protruding portion 10e engages with the stepped portion 3b described above. As the protruding portion 10e engages the stepped portion 3b with the abutting surface 10h in abutment against the axially outward surface of the inner race flange 3a, the seal 10 is secured to the inner race 3.

As shown in FIG. 1, because the distance from the end face of the inner race 3 to the rolling element 4 is small and because the holder 5 is located in the close vicinity of the end face of the inner race 3, spatial restrictions are imposed when the seal 10 is press-fitted on the diaphragm spring 20 side portion of the inner race 3. In this embodiment, however, the stepped portion 3b is provided so that the seal 10 may be press-fitted with a small press-fitting dimension.

The seal 10 has two lip portions 10c and 10d. The lip portion 10c is formed at a location closer to the rolling element 4 than the lip portion 10d, and extends to the vicinity of the outer race 2. The lip portion 10d is formed at a location farther from the rolling element 4 than the lip portion 10c, and extends radially inward and in a direction to avoid interference with the outer race 2 to a position beyond the outer race flange 2a of the outer race 2.

As shown in FIG. 1, the two lip portions 10c and 10d are both formed at a position axially outward from the contact area between the inner race 3 and the seal 10. Thus, a larger space than in conventional designs is provided between the lip portion 10c and the rolling element bearing 4, and a larger amount of grease may be contained in the space. The two lip portions 10c and 10d may be formed at an outward position in an axial direction with respect to an outer axial end of the seal member 10.

The lip portion 10c is configured so that the tip portion is located radially outward from the base portion. This configuration is advantageous for retaining the grease within the bearing. Also, the lip portion 10d is configured so that the tip portion is located radially inward from the base portion. This configuration provides a labyrinth effect between the lip portion 10d and the outer race flange 2a and effectively prevents entrance of muddy water from the outside.

Also, as shown in FIG. 1, the seal 10 has a flat portion 10f that extends perpendicular to the axial direction between the lip portion 10c and the lip portion 10d. When the seal 10 is press-fitted on the inner race 3, the flat portion 10f facilitates the press fitting because the flat portion 10f may be pressed.

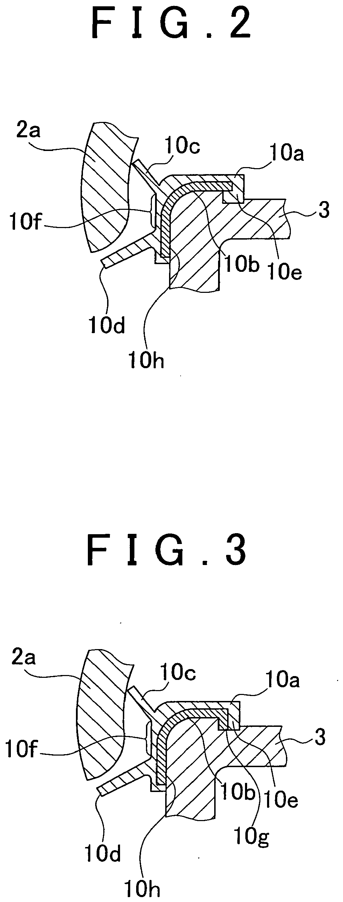

Modifications of the embodiment shown in FIG. 1 are shown below. The modifications are shown in FIG. 2 to FIG. 5. In FIG. 2 to FIG. 5, only the seal 10 and its surroundings are shown. Otherwise, all the other parts can be the same as indicated in FIG. 1.

First, the modification shown in FIG. 2 is described. In FIG. 1, the resin portion 10a lies between the core piece 10b and the outer peripheral surface of the inner race 3 on which the seal 10 is press-fitted. In FIG. 2, however, the resin portion 10a does not lie between the core piece 10b and the outer peripheral surface of the inner race 3, and the core piece 10b is in direct contact with the outer peripheral surface of the inner race 3. In this case, because the core piece 10b is press-fitted directly on the outer peripheral surface of the inner race 3, the fastening force of the press-fitting may be increased. On the other hand, if the resin portion 10a contacts the outer peripheral surface of the inner race 3 as shown in FIG. 1, the sealing characteristics between the inner race 3 and the seal 10 for preventing the entry of contaminants may be enhanced.

The modification shown in FIG. 3 is next described. In FIG. 1, only the resin portion 10a has a protruding portion 10e. In FIG. 3, however, the core piece 10b also has a protruding portion 10g. This arrangement facilitates more reliable engagement of the protruding portions 10e and 10g with the stepped portion 3b.

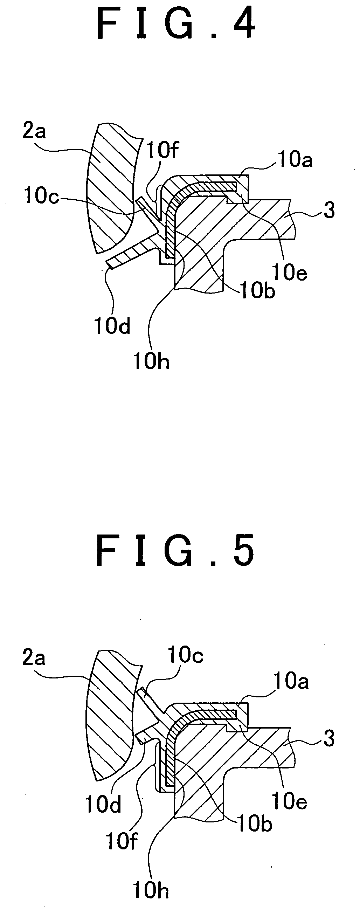

The modification shown in FIG. 4 is next described. In FIG. 1, a flat portion 10f is provided between the lip portion 10c and the lip portion 10d. In FIG. 4, however, the base portion of the lip portion 10c is formed radially outward of and adjacent to the base portion of the lip portion 10d with no separation between the lip portion 10c and the lip portion 10d. The flat portion 10f is formed radially outward of the lip portion 10c. In this case, a larger space may be used to contain grease, and good lubrication and longer service life of the bearing can be achieved with a larger amount of grease.

In the modification shown in FIG. 5, there is no separation between the lip portion 10c and the lip portion 10d as in the case of FIG. 4. The lip portion 10c is located at the same position as shown in FIG. 1, and the base portion of the lip portion 10d is formed radially inward of and adjacent to the base portion of the lip portion 10c. The flat portion 10f is formed radially inward of the lip portion 10d. This arrangement prevents entrance of foreign contaminants such as muddy water at a position closer to the inside of the bearing. Because the two lip portions 10c and 10d are formed at a position closer to the inside of the bearing, this arrangement can contribute to the downsizing of the bearing 1.

In the structures shown in FIG. 4 and FIG. 5, the core piece 10b may be in direct contact with the outer peripheral surface of the inner race 3 as shown in FIG. 2. Also, in the structures shown in FIG. 4 and FIG. 5, the core piece 10b may have a protruding portion 10g as shown in FIG. 3. In such cases, the effects described above may be advantageously combined.

In the above embodiment and modifications, there may be provided only one lip portion. If the grease can be reliably retained without the lip portion 10c, the lip portion 10c may be omitted to reduce costs. If the entry of contaminants such as muddy water can be reliably prevented without the lip portion lOd, the lip portion 10d may be omitted to reduce costs. When one lip portion is sufficient to retain grease and prevent the entry of contaminants such as muddy water, the other lip portion may be omitted to reduce costs.

## Claims

1. A clutch release bearing having an outer race (2) as a rotating wheel, the clutch release bearing comprising:
a seal member (10), having an inner axial end and an outer axial end, that is fitted on an outer peripheral surface of an inner race (3), that faces a diaphragm spring when the release bearing is in the mounted state, wherein the seal member (10) having a lip portion (10c, 10d) that extends toward the outer race (2), **characterized by** an abutting surface (10h) that extends radially from the outer axial end and that abuts an axial surface of the inner race (3), a protruding portion (10e) that protrudes radially inward from the inner axial end; and
a stepped portion (3b) formed on the inner race (3) that engages the protruding portion (10e).

2. The clutch release bearing according to claim 1,
wherein the lip portion (10c, 10d) is formed axially outward from a contact area between the inner race (3) and the seal member (10).

3. The clutch release bearing according to claim 1,
wherein the lip portion (10c, 10d) is formed at an outward position in an axial direction with respect to the outer axial end of the seal member (10).

4. The clutch release bearing according to any one of claims 1 through 3, wherein the lip portion (10c, 10d) further comprises:
a first lip portion (10c) that is located closer to a rolling element (4) disposed between the outer race (2) and the inner race (3) and that has a base portion and a tip portion, wherein the tip portion is located radially outward of the base portion; and
a second lip portion (10d) located farther away from the rolling element (4) that also has a base portion and a tip portion, wherein the tip portion is located radially inward of the base portion.

5. The clutch release bearing according to claim 4,
wherein the first lip portion (10c) and the second lip portion (10d) are formed axially outward from a contact area between the inner race (3) and the seal member (10).

6. The clutch release bearing according to claim 4,
wherein a flat portion (10f) perpendicular to the axial direction is formed between the first lip portion (10c) and the second lip portion (10d).

7. The clutch release bearing according to any one of claims 1 through 6, wherein the seal member (10) is constituted of a resin portion (10a) and a core piece portion (10b), and the resin portion (10a) is formed between the inner race (3) and the core piece portion(10b).

8. The clutch release bearing according to any one of claims 1 through 6, wherein the seal member (10) is constituted of a resin portion (10a) and a core piece portion (10b), and the core piece portion (10b) is in direct contact with an outer peripheral surface of the inner race (3).

9. The clutch release bearing according to any one of claims 1 through 4, wherein the protruding portion (10e) is formed by the core piece portion (10b).

10. The clutch release bearing according to claim 4, wherein the base portion of the first lip portion (10c) is formed radially outward of and adjacent to the base portion of the second lip portion (10d).

11. The clutch release bearing according to claim 10 wherein a flat portion (10f) is formed radially outward of the first lip portion (10c).

12. The clutch release bearing according to claim 10 wherein a flat portion (10f) is formed radially inward of the second lip portion (10d).

## Patentansprüche

1. Kupplungsausrücklager mit einem äußeren Laufring (2) als Rotationsrad, wobei das Kupplungsausrücklager aufweist:
- ein Dichtungselement (10) mit einem inneren axialen Ende und einem äußeren axialen Ende, das auf einer äußeren Umfangsfläche eines inneren Laufrings (3) angepasst ist, dass einer Membranfeder gegenüberliegt, wenn sich das Ausrücklager im montierten Zustand befindet, wobei das Dichtungselement (10) einen Lippenbereich (10c, 10d) aufweist, der sich zum äußeren Laufring (2) erstreckt,
- **gekennzeichnet durch** eine Anlagefläche (10h), die sich radial vom äußeren axialen Ende erstreckt und die an einer axialen Fläche des inneren Laufrings (3) anliegt, durch einen hervorstehenden Bereich (10e) der radial nach innen vom inneren axialen Ende hervorsteht; und
- einen gestuften Bereich (3b), der auf dem inneren Laufring (3) ausgebildet ist, der mit dem hervorstehenden Bereich (10e) in Eingriff steht.

2. Kupplungsausrücklager gemäß Anspruch 1,
- wobei der Lippenbereich (10c, 10d) axial nach außen von einem Kontaktbereich zwischen dem inneren Laufring (3) und dem Dichtungselement (10) ausgebildet ist.

3. Kupplungsausrücklager gemäß Anspruch 1,
- wobei der Lippenbereich (10c, 10d) an einer äußeren Position in einer axialen Richtung bezüglich des äußeren axialen Endes des Dichtungselements (10) ausgebildet ist.

4. Kupplungsausrücklager gemäß einem der Ansprüche 1 bis 3, wobei der Lippenbereich (10c, 10d) ferner aufweist:
- einen ersten Lippenbereich (10c), der näher zu einem Wälzelement (4) angeordnet ist, das zwischen dem äußeren Laufring (2) und dem inneren Laufring (3) angeordnet ist und das einen Basisbereich und einen Spitzenbereich aufweist, wobei der Spitzenbereich radial nach außen vom Basisbereich angeordnet ist, und
- einen zweiten Lippenbereich (10d), der weiter weg vom Wälzelement (4) angeordnet ist, das ebenfalls einen Basisbereich und einen Spitzenbereich aufweist, wobei der Spitzenbereich radial nach innen vom Basisbereich angeordnet ist.

5. Kupplungsausrücklager gemäß Anspruch 4,
- wobei der erste Lippenbereich (10c) und der zweite Lippenbereich (10d) axial nach außen von einem Kontaktbereich zwischen dem inneren Laufring (3) und dem Dichtungselement (10) ausgebildet sind.

6. Kupplungsausrücklager gemäß Anspruch 4,
- wobei ein ebener Bereich (10f), der senkrecht zur axialen Richtung ist, zwischen dem ersten Lippenbereich (10c) und dem zweiten Lippenbereich (10d) ausgebildet ist.

7. Kupplungsausrücklager gemäß einem der Ansprüche 1 bis 6,
- wobei das Dichtungselement (10) aus einem Kunstharzbereich (10a) und einem Kernstückbereich (10b) gebildet wird, und der Kunstharzbereich (10a) zwischen dem inneren Laufring (3) und dem Kernstückbereich (10b) ausgebildet ist.

8. Kupplungsausrücklager gemäß einem der Ansprüche 1 bis 6,
- wobei das Dichtungselement (10) aus einem Kunstharzbereich (10a) und einem Kernstückbereich (10b) gebildet wird, und der Kernstückbereich (10b) in direktem Kontakt mit einer äußeren Umfangsfläche des inneren Laufrings (3) ist.

9. Kupplungsausrücklager gemäß einem der Ansprüche 1 bis 4,
- wobei der hervorstehende Bereich (10e) durch den Kernstückbereich (10b) gebildet wird.

10. Kupplungsausrücklager gemäß Anspruch 4,
- wobei der Basisbereich des ersten Lippenbereichs (10c) radial nach außen vom und benachbart zum Basisbereich des zweiten Lippenbereichs (10d) ausgebildet ist.

11. Kupplungsausrücklager gemäß Anspruch 10,
- wobei ein ebener Bereich (10f) radial nach außen vom ersten Lippenbereich (10c) ausgebildet ist.

12. Kupplungsausrücklager gemäß Anspruch 10,
- wobei ein ebener Bereich (10f) radial nach innen vom zweiten Lippenbereich (10d) ausgebildet ist.

## Revendications

1. Butée de débrayage ayant une bague extérieure (2) en tant que roue rotative, la butée de débrayage comprenant :
un élément d'étanchéité (10), ayant une extrémité axiale intérieure et une extrémité axiale extérieure, qui est ajusté sur une surface périphérique extérieure d'une bague intérieure (3), qui fait face à un ressort à diaphragme lorsque la butée de débrayage est à l'état monté, où l'élément d'étanchéité (10) a une partie de lèvre (10c, 10d) qui s'étend vers la bague extérieure (2), **caractérisée par** une surface de butée (10h) qui s'étend radialement à partir de l'extrémité axiale extérieure et qui vient en butée contre une surface axiale de la bague intérieure (3), une partie saillante (10e) qui fait saillie radialement vers l'intérieur à partir de l'extrémité axiale intérieure ; et
une partie étagée (3b) formée sur la bague intérieure (3) qui vient en prise avec la partie saillante (10e).

2. Butée de débrayage selon la revendication 1, dans laquelle
la partie de lèvre (10c, 10d) est formée axialement vers l'extérieur à partir d'une zone de contact entre la bague intérieure (3) et l'élément d'étanchéité (10).

3. Butée de débrayage selon la revendication 1, dans laquelle
la partie de lèvre (10c, 10d) est formée à une position extérieure dans une direction axiale par rapport à l'extrémité axiale extérieure de l'élément d'étanchéité (10).

4. Butée de débrayage selon l'une quelconque des revendications 1 à 3, dans laquelle la partie de lèvre (10c, 10d) comprend en outre :
une première partie de lèvre (10c) qui est située plus près d'un élément roulant (4) disposé entre la bague extérieure (2) et la bague intérieure (3) et qui a une partie de base et une partie de pointe, où la partie de pointe est située radialement vers l'extérieur de la partie de base ; et
une deuxième partie de lèvre (10d) située plus loin de l'élément roulant (4) qui a également une partie de base et une partie de pointe, où la partie de pointe est située radialement vers l'intérieur de la partie de base.

5. Butée de débrayage selon la revendication 4,
dans laquelle la première partie de lèvre (10c) et la deuxième partie de lèvre (10d) sont formées axialement vers l'extérieur à partir d'une zone de contact entre la bague intérieure (3) et l'élément d'étanchéité (10).

6. Butée de débrayage selon la revendication 4,
dans laquelle une partie plate (10f) perpendiculaire à la direction axiale est formée entre la première partie de lèvre (10c) et la deuxième partie de lèvre (10d).

7. Butée de débrayage selon l'une quelconque des revendications 1 à 6,
dans laquelle l'élément d'étanchéité (10) est constitué d'une partie en résine (10a) et d'une partie de pièce centrale (10b), et la partie en résine (10a) est formée entre la bague intérieure (3) et la partie de pièce centrale (10b).

8. Butée de débrayage selon l'une quelconque des revendications 1 à 6,
dans laquelle l'élément d'étanchéité (10) est constitué d'une partie en résine (10a) et d'une partie de pièce centrale (10b), et la partie de pièce centrale (10b) est en contact direct avec une surface périphérique extérieure de la bague intérieure (3).

9. Butée de débrayage selon l'une quelconque des revendications 1 à 4,
dans laquelle la partie saillante (10e) est formée par la partie de pièce centrale (10b).

10. Butée de débrayage selon la revendication 4,
dans laquelle la partie de base de la première partie de lèvre (10c) est formée radialement vers l'extérieur de la partie de base de la deuxième partie de lèvre (10d) et de manière adjacente à celle-ci.

11. Butée de débrayage selon la revendication 10,
dans laquelle une partie plate (10f) est formée radialement vers l'extérieur de la première partie de lèvre (10c).

12. Butée de débrayage selon la revendication 10,
dans laquelle une partie plate (10f) est formée radialement vers l'intérieur de la deuxième partie de lèvre (10d).
